# EUROPEAN PATENT APPLICATION

(11) **EP 4 542 845 A1**
(43) Date of publication of application: **23.04.2025**
(21) Application number: 23204127.7
(22) Date of filing: 17.10.2023
(51) Int. Cl.: H02P 5/74, H02P 21/18, H02P 21/24

(54) **METHOD AND COMPUTER PROGRAM FOR OPERATING A DRIVE ARRANGEMENT, DRIVE ARRANGEMENT, MOTOR ARRANGEMENT, AND COMPUTER READABLE MEDIUM**

(71) Applicant: ABB SCHWEIZ AG, 5400 Baden (CH)
(72) Inventor: Heikkilä, Samuli, 00380 Helsinki (FI)
(74) Representative: Sykora & König Patentanwälte PartG mbB

(57) **Abstract**

A method for operating a drive arrangement (22) is described. The drive arrangement (22) comprises a master drive (24) for driving a master motor (30) and at least one follower drive (26) for driving a follower motor (32), wherein the master motor (30) and the follower motor (32) are drivable independent from each other via the master drive (24) and, respectively, the follower drive (26) and are physically coupled to the same load (34). The method comprises determining an estimated speed (nₑₛₜ) of the master motor (30); transferring the estimated speed (nₑₛₜ) to the follower drive (26); and operating the follower drive (26) by using the estimated speed (nₑₛₜ) of the master drive (24) as a follower speed reference (n_{ref_f}) for the follower drive (26).

## Description

### FIELD OF THE INVENTION

The invention relates to the field of drive arrangements for driving electric motors. In particular, the invention relates to a method and a computer program for operating a drive arrangement and to the corresponding drive arrangement. Further, the invention relates to a motor arrangement comprising the drive arrangement, and to a computer readable medium, on which the computer program is stored.

### BACKGROUND OF THE INVENTION

A motor arrangement as referred to in the present description may comprise two or more electric motors, in particular a master motor and at least one follower motor, and a drive arrangement for driving the electric motors. The electric motors are simply referred to as "motors" in the following. The master motor may be mechanically coupled to a load to be moved by the master motor. For example, an output shaft of the master motor may be mechanically coupled to the load. The follower motor may be mechanically coupled to the load also. For example, an output shaft of the follower motor may be mechanically coupled to the load. As such, the master motor and the follower motor may be physically coupled to each other via the mechanical couplings to the load and via the load itself.

For example, in case of the motors driving an assembly line by an assembly belt, each of the output shafts of the motors may be physically, in particular mechanically, coupled to the assembly belt and thereby may be physically coupled to each other via the assembly belt. Alternatively, the physical coupling may be a hydraulic coupling. For example, in case of the motors driving a water pump, the motors may be physically, in particular hydraulically, coupled to each other by a stream of water streaming through the pump. Because of these physical couplings, the torque from one of the motors may be transferred to another one of the motors.

The drive arrangement may comprise a master drive for operating the master motor and a follower drive for each of the follower motors. The master drive and the follower drive may be communicatively coupled to each other such that data, e.g. one or more parameter values and/or signals may be transferred from one of the drives to another one of the drives. This concept may be referred to as master/follower (archaically: master/slave) concept. Many industrial applications are based on such multidrive systems where individually controlled electric motors are physically, in particular mechanically, coupled to the same load. Such applications are typically for example roller tables and rolling mills in steel industry. They are usually controlled using the master/follower concept where the master drive sends reference signals through one or more master/follower links to the corresponding follower drives. For example, the master drive may send speed- and/or torque reference signals to the corresponding follower drives. Such master/follower concepts are well known in the art and widely used for many years.

In case of a tight mechanical coupling between the motors via the load, as e.g. in case of the assembly belt being the load, the follower drives may be operated in a torque control mode to assure that the load is evenly shared between the motors. However, this is not always possible due to the well-known motor model instability issues when operating close to zero speed in open-loop mode. The issue may be especially pronounced in torque follower mode when the follower motor is at standstill and the master drive starts slowly accelerating the shaft speed of the output shaft of the master motor while the follower drive is receiving the torque reference from the master drive. Due to the slow acceleration rate, the commanded torque may be rather small what may be challenging for the follower drive as it tries to be synchronized with the slowly accelerating speed. Sometimes, a minor parameter error can cause the master/follower start to fail as the follower's motor model has gone unstable keeping estimated speed stuck at zero speed.

For example, the follower drive may be in torque follower mode and may receive the torque reference from the master drive. While running the output shaft of the master motor at low speed, e.g. between 10 rpm and 30 rpm, e.g. at 20 rpm speed, the follower speed may collapse to zero and after a short while also master's speed drops to zero as it tries to fight against the braking torque the follower motor is producing. Due to the huge orientation error, the follower drive may push the torque into the wrong direction thus keeping the output shaft of the follower drive stuck at zero despite the same torque reference limited to a maximum positive value in both drives. In this case, only a minor change (like ±3%) in motor parameters of the motor model may fully stabilize the corresponding motor model at these critical operation points, e.g. 20rpm and zero load. In practice however, it is hard to impossible to achieve such a parameter accuracy that would fully guarantee the stability in all operation points which addresses the problem with master/follower controlled sensorless applications. Even motor temperature variations due to different load conditions and/or ambient temperature may cause a critical change in motor parameters.

On the other hand, master drive's motor model normally does not have such problems because usually a speed controller of the master drive improves the motor model stability. If the estimated speed tends to get stuck at zero, the speed controller asks more torque to kick the model out of zero speed or frequency which is usually the most challenging operation point for a sensorless control. Thus, in most cases the follower drive's motor model is the root cause for sensorless master/follower control issues and in some cases its motor model may collapse even in steady state with zero load.

Conventionally, there are the following options available to solve these master/follower control issues:
Firstly, manual fine-tuning of motor parameters (with temperature adaptations enabled). However, this option may require a control specialist to give support for the customer, yet the issue may not get solved or it gets only partly fixed.
Secondly, change from torque- to speed follower mode with drooping. This may improve the stability, but then load share unbalance may become a bigger problem especially with lower drooping rates which are most likely needed to keep the motor model stable at low-speed range.
Thirdly, ask customer to change their production cycles and the related parameters, like ramp times, minimum speeds, etc. to avoid problematic operation points. However, customers are quite often reluctant to change any production related parameters and even if they would, there is still a risk that the changes won't fix the problem.
Fourthly, encoders may be installed for each of the follower drives and corresponding follower motors and the drives may be run in closed-loop modes each. This option would fully solve all of the above issues, but for each of the encoders the costs for the corresponding motor arrangement increase.

### DESCRIPTION OF THE INVENTION

It is an objective of the present invention to provide a method and a computer program for operating a drive arrangement, which enables to accurately operate a master drive and a follower drive of the drive arrangement and which enables to keep the costs for a motor arrangement comprising the drive arrangement low. It is another objective of the present invention to provide the drive arrangement and the motor arrangement. Further, it is an objective of the present invention to provide a computer readable medium on which the computer program is stored.

These objectives are achieved by the subject-matter of the independent claims. Further exemplary embodiments are evident from the dependent claims and the following description.

An aspect relates to a method for operating a drive arrangement. The drive arrangement comprises a master drive for driving a master motor and at least one follower drive for driving a follower motor, wherein the master motor and the follower motor are drivable independent from each other via the master drive and, respectively, the follower drive and wherein the master motor and the follower motor are physically coupled to the same load. The method comprises determining an estimated speed of the master motor; transferring the estimated speed to the follower drive; operating the follower drive by using the estimated speed of the master drive as a follower speed reference for the follower drive.

The drive arrangement enables to omit encoders for measuring a speed of the master motor and of the follower motor while providing an accurate and functional coupling between the master drive and the follower drives. This enables to avoid extra cost for the encoders. In addition, this keeps the structure of the drive arrangement relatively simple and as such contributes to a long lifetime of and to a low maintenance effort for the drive arrangement.

The master drive and the follower drive each may be embodied as an electric circuit comprising one or more electronic components, as e.g. conductors, resistors, coils, semiconductor switches, microchips, etc. The master drive and the follower drive each may comprise one or more hardware components and/or one or more software components running on the hardware components, as e.g. the microchips.

In the present application, any "estimated" parameter value may be determined by estimating the corresponding parameter value. The estimated parameter values may be determined by a master motor model of the master motor or by a follower motor model of the follower motor. These motor models each may be a software- and/or digital data-representation of the corresponding motor. These motor models may be used to output estimated parameter values being representative for a behaviour of the corresponding motor depending on one or more input parameter values provided to the motor models. Such motor models are well known in the art and widely used in the art over many years.

In particular, the estimated speed may be determined by estimating the estimated speed. The estimated speed may be determined by a master motor model of the master motor. The master motor model may be a software/data-representation of the master motor, as they are well known in the art. The estimated speed may be transferred to the follower drive by wired or wireless communication, e.g. by a D2D communication.

Operating the follower drive by using the estimated speed of the master drive as a follower speed reference for the follower drive may be referred to as "pseudo-closed-loop" mode. The control mode for the follower drive may be referred to as pseudo-closed-loop mode, because for a real closed-loop mode, a speed of the follower drive would have to be determined and would have to be used as the speed reference for the follower drive, and because for the pseudo-closed-loop mode the estimated speed of the master drive is used as the speed reference for the follower drive instead. Apart from that, the pseudo-closed-loop mode may correspond to a normal closed-loop control as they are known in the art of electric motor control.

The master motor and the follower motor may be physically coupled to the same load such that the master motor and the follower motor are physically coupled to each other via the load. In other words, the load to be moved by the master motor and the follower motor may mechanically couple the master motor and the follower motor to each other. In some embodiments, the load may represent a mechanical coupling of the motors to each other such that a torque and/or speed of the master motor may influence the torque and/or, respectively, the speed of the follower motor via the mechanical coupling. For example, in case of the motors driving an assembly line by an assembly belt, each of the output shafts of the motors may be physically, in particular mechanically, coupled to the assembly belt and thereby may be physically and in particular mechanically coupled to each other via the assembly belt. Alternatively, the physical coupling may be a hydraulic coupling. For example, in case of the motors driving a water pump, the motors may be physically, in particular hydraulically, coupled to each other by a stream of water. Because of these physical couplings, the torque from one of the motors may be transferred to another one of the motors. This torque transfer may lead to an alignment of the individual speeds of the motors to each other. Therefore, it may be assumed that the speed of the master motor at least approximately corresponds to the speed of the follower motor. Therefore, the estimated speed of the master motor can be used as the speed reference for the follower drive.

According to an embodiment, the follower drive is operated in the pseudo-closed-loop mode by using the estimated speed of the master drive as the follower speed reference for the follower drive and the master drive is operated in the open-loop mode. The open-loop mode of the master drive may be referred to as open-loop control. The open-loop mode may correspond to any known open-loop mode known in the art of electric motor control.

According to an embodiment, the master drive is open-loop controlled depending on a master torque reference of the master drive, the master torque reference is transferred to the follower drive, and the follower drive is operated in the pseudo-closed-loop control by using the master torque reference as a follower torque reference for the follower drive. So, the master drive and the follower drive may be operated in a torque control mode. In other words, the master drive and the follower drive may be provided with the master torque reference and controlled such that each of the drives provides the corresponding torque. However, the master drive is operated with the open-loop control, in particular in an open-loop torque control mode. For providing this open-loop torque control, the motor model of the master drive may be provided which determines an estimated torque depending on one or more measurements, e.g. depending on an actual current and/or an actual voltage supplied to an electric motor coupled to the master drive. In addition, the motor model may be used to determine the estimated speed, as explained above.

According to an embodiment, the master torque reference is determined by a speed controller of the master drive. Preferably, the master drive only comprises the speed controller. In other words, preferably, the follower drive(s) do not comprise any speed controllers. Further, neither the master drive nor the follower drive may use any encoder signal for determining an actual speed of the corresponding drive. So, no encoder may be needed for the drive arrangement, in particular for operating the drive arrangement. According to an embodiment, the master torque reference is determined depending on a master speed reference and on the estimated speed.

According to an embodiment, the estimated speed is determined by a master motor model of the master drive.

According to an embodiment, the estimated speed is transferred to the follower drive by a D2D communication. The estimated speed may be transferred to the follower drive by a wired or wireless connection.

An aspect relates to a drive arrangement, comprising: a master drive for driving a master motor; at least one follower drive for driving a follower motor, wherein the master motor and the follower motor are drivable independent from each other via the master drive and, respectively, the follower drive and wherein the master motor and the follower motor are physically coupled to the same load; and a main controller for operating the drive arrangement, wherein the main controller comprises a memory for storing one or more parameter values of the drive arrangement and a processor configured for executing the method as explained above and in the following.

According to an embodiment, the master drive comprises a speed controller, and the follower drive is free from any speed controller. So, the follower drive does not comprise any speed controller. Further, neither the master motor nor the follower motor(s) may be provided with any sensors, e.g. encoders, for measuring the speed of the corresponding motor.

According to an embodiment, the master drive and the follower drive are communicatively coupled to each other. This enables to transfer one or more parameter values from the master drive to the follower drive. For example, the master drive can send the estimated speed and/or an estimated torque reference to the follower drive because of the communicative coupling. The master drive and the follower drive may be communicatively coupled to each other via a wired or wireless connection. The master drive and the follower drive may be communicatively coupled to each other via the D2D connection.

An aspect relates to a motor arrangement, comprising: the master motor being physically coupled to the load; at least one of the follower motors being physically coupled to the load and via the load to the master motor; and the drive arrangement as explained above and in the following.

An aspect relates to a computer program for operating the drive arrangement as explained above and in the following, the computer program being configured such that when the computer program is carried out by a processor of the main controller, the processor carries out the method as explained above and in the following.

An aspect relates to a computer readable medium, on which a computer program as explained above and in the following is stored. The computer-readable medium may be a floppy disk, a hard disk, an USB (Universal Serial Bus) storage device, a RAM (Random Access Memory), a ROM (Read Only Memory), an EPROM (Erasable Programmable Read Only Memory) or a FLASH memory. The computer readable medium may also be a data communication network, e.g. the Internet, which allows downloading a program code. In general, the computer-readable medium may be a non-transitory or transitory medium.

It has to be understood that some features of the present invention are described in context of one of the above aspects and/or its embodiments only, but that these features may be easily transferred to another embodiment of the same aspect or to one or more embodiments of another one of the above aspects without departing from the scope of the present invention.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 shows a block diagram of an exemplary embodiment of a motor arrangement; and
Fig. 2 shows a flow diagram of an exemplary embodiment of a method for operating a drive arrangement.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

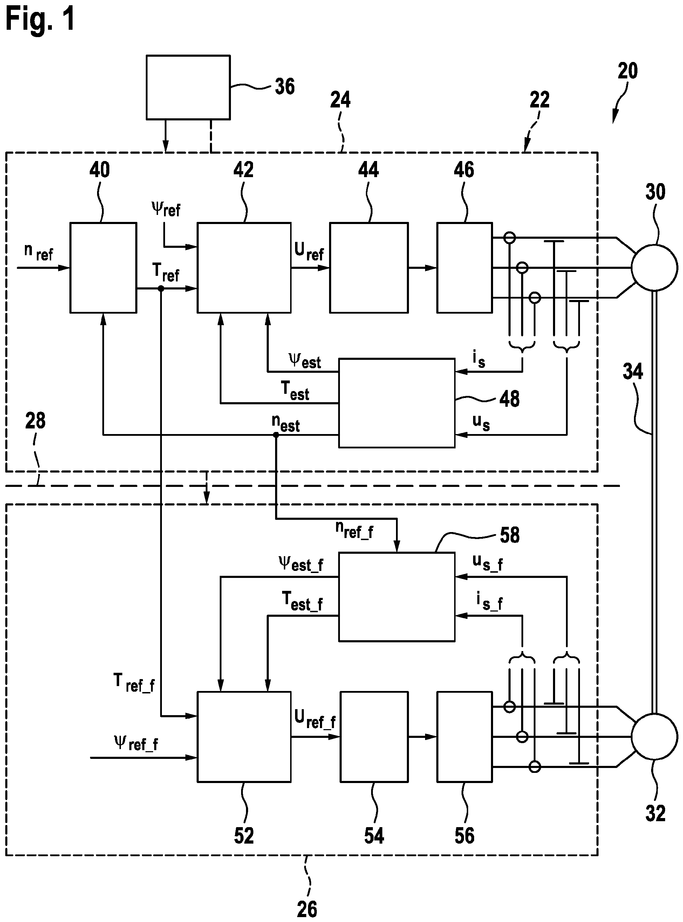

Fig.1 shows a block diagram of an embodiment of a motor arrangement 20. The motor arrangement 20 comprises a master motor 30, a follower motor 32, a drive arrangement 22, and a main controller 36. The master motor 30 and the follower motor 32 each are electric motors. The drive arrangement 22 comprises a master drive 24 for operating, in other words "driving", the master motor 30 and a follower drive 26 for operating, in other words "driving", the follower motor 32. The master drive 24 and the follower drive 26 are communicatively coupled to each other via a communicative coupling 28.

The drive arrangement 22 is widely configured in accordance with the well-known master/follower principle as described above. In addition, each of the master drive 24 and the follower drive 26 are widely configured as it is known in the art of electric motor control. Therefore, in the following, only the basic principles of the individual blocks of the block diagram of the drive arrangement 22 are explained first and the focus is set to the features of the present invention afterwards, in order not to obscure the gist of the present invention.

The master drive 22 may comprise a speed controller 40, a master torque controller 42, a master modulator 44, a master power unit 46, and a master motor model 48. The follower drive 22 may comprise a follower torque controller 52, a follower modulator 54, a follower power unit 56, and a follower motor model 54.

The speed controller 40 may determine master torque reference T_{ref} depending on a given master speed reference n_{ref} and an estimated speed nₑₛₜ determined by the master motor model 48. In particular, the speed controller 40 may determine a difference between the given master speed reference n_{ref} and the estimated speed nₑₛₜ and may determine the master torque reference T_{ref}, e.g. by a Proportional-Integral-Derivative (PID) controller, as it is known in the art.

The master torque controller 42 may determine a master voltage reference U_{ref} depending on the master torque reference T_{ref}, on a master flux reference *Ψ*_{ref}, on an estimated master flux *Ψ*ₑₛₜ, and an estimated master torque Tₑₛₜ. For example, the master voltage reference U_{ref} may be determined by determining a difference between the master flux reference *Ψ*ref and the estimated master flux *Ψ*ₑₛₜ, by determining a difference between the master torque reference T_{ref} and the estimated master torque Tₑₛₜ, and/or by differentiating the master flux reference *Ψ*_{ref}, optionally for every phase of an output current of the master drive 24. For example, the master voltage reference U_{ref} may be given as a complex number including all the information for each of the phases, as it is known in the art. The master flux reference *Ψ*_{ref} may refer to a flux within a stator of the master motor 30 and may be used as a reference value for the electric power provided to the master motor 30.

The master modulator 44 may determine one or more switching signals for one or more semiconductor switches (not shown) of the master power unit 46 depending on the master voltage reference U_{ref}. The switching signals may define, which semiconductor switch of the master power unit 46 has to be activated or deactivated at which time. A modulation method used by the master modulator 44 may be Pulse-Width-Modulation (PWM) or state vector modulation, as known in the art.

The master power unit 46 may be an electric converter, in particular an electric inverter, as they are known in the art. The master power unit 46 may comprise one or more half-bridges, wherein each of the half-bridges may comprises one or more of the semiconductor switches to be switched depending on the switching signals representing an output of the master modulator 44. In the result, the master power unit 46 may provide a 3-phase-current to the master motor 30.

An actual master current iₛ and an actual master voltage uₛ may be measured by one or more corresponding sensors (not shown). The actual master current iₛ and the actual master voltage uₛ may be used as an input for the master motor model 48.

The master motor model 48 may determine an estimated master flux *Ψ*ₑₛₜ, an estimated master torque Tₑₛₜ, and the estimated speed nₑₛₜ depending on the actual master current iₛ and the actual master voltage uₛ, as it is known in the art. The master motor model 48 may be a software/data representation of the master motor 30 and may comprise digital information about a structure of the master motor 30, for example of a number of coils of the master motor 30, a size of the coils, etc.

The follower drive 26 may comprise a follower torque controller 52, a follower modulator 54, a follower power unit 56, and a follower motor model 58. The follower drive 26 may not comprises any speed controller 52. The follower drive 26 may comprise a follower torque controller 52, a follower modulator 54, a follower power unit 56, and a follower motor model 58.

The follower torque controller 52 may determine a follower voltage reference U_{ref_f} depending on a follower torque reference T_{ref_f}, which may correspond to the master torque reference T_{ref}, depending on a given flux reference *Ψ*_{ref_f}, depending on an estimated follower flux *Ψ*_{est_f}, and depending on an estimated follower torque T_{est_f}. For example, the follower voltage reference U_{ref_f} may be determined by determining a difference between the follower flux reference *Ψ*_{ref_f} and the estimated follower flux *Ψ*_{est_f}, by determining a difference between the follower torque reference T_{ref_f} and the estimated follower torque T_{est_f}, and/or by differentiating the follower flux reference *Ψ*_{ref_f}, optionally for every phase of an output current of the follower drive 26. For example, the follower voltage reference U_{ref_f} may be given as a complex number including all the information for each of the phases, as it is known in the art. The follower flux reference *Ψ*_{ref_f} may refer to a flux within a stator of the follower motor 32 and may be used as a reference value for the electric power provided to the follower motor 32.

The follower modulator 54 may determine one or more switching signals for one or more semiconductor switches (not shown) of the follower power unit 56 depending on the follower voltage reference U_{ref_f}. The switching signals may define, which semiconductor switch of the follower power unit 56 has to be activated or deactivated at which time. A modulation method used by the follower modulator 54 may be Pulse-Width-Modulation (PWM) or state vector modulation, as known in the art.

The follower power unit 56 may be an electric converter, in particular an electric inverter, as they are known in the art. The follower power unit 56 may comprise one or more half-bridges, wherein each of the half-bridges may comprises one or more of the semiconductor switches to be switched depending on the switching signals representing an output of the follower modulator 54. In the result, the follower power unit 56 may provide a 3-phase-current to the follower motor 32.

An actual follower current i_{s_f} and an actual follower voltage u_{s_f} may be measured by one or more corresponding sensors (not shown). The actual follower current i_{s_f} and the actual follower voltage u_{s_f} may be used as an input for the follower motor model 58.

The follower motor model 58 may determine the estimated follower flux *Ψ*_{est_f} and the estimated follower torque T_{est_f}, as it is known in the art. The follower motor model 58 may be a software/data representation of the follower motor 32 and may comprise digital information about a structure of the follower motor 32, for example of a number of coils of the follower motor 32, a size of the coils, etc.

The master motor 30 and the follower motor 32 each are mechanically coupled to a load 34. The master motor 30 and the follower motor 32 are physically coupled to each other via the load 34. The master motor 30 and the follower motor 32 are drivable independent from each other via the master drive 24 and, respectively, the follower drive 26. Optionally, neither the master motor 30 nor the follower motor(s) 32 may be equipped with any sensors, e.g. encoders, for measuring the speed and/or position (mechanical angle) of the corresponding motor 30, 32.

The load 34 to be moved by the master motor 30 and the follower motor 30 may mechanically couple the master motor 30 and the follower motor 32 to each other. In some embodiments, the load 34 may represent a mechanical coupling of the motors 30, 32 to each other such that a torque and/or speed of the master motor 30 may influence the torque and/or, respectively, the speed of the follower motor 32 via the mechanical coupling. For example, in case of the motors 30, 32 driving an assembly line by an assembly belt, each of the output shafts of the motors 30, 32 may be physically, in particular mechanically, coupled to the assembly belt and thereby may be physically, in particular mechanically, coupled to each other via the assembly belt. Alternatively, the physical coupling may be a hydraulic coupling. For example, in case of the motors 30, 32 driving a water pump, the motors 30, 32 may be physically, in particular hydraulically, coupled to each other by a stream of water. Because of these physical couplings, the torque from one of the motors 30, 32 may be transferred to another one of the motors 30, 32. This torque transfer may lead to an alignment of the individual speeds of the motors 30, 32 to each other. Therefore, it may be assumed that the speed of the master motor 30 at least approximately corresponds to the speed of the follower motor 32. Therefore, an estimated speed n_{est_f} of the master motor 30 can be used as a speed reference n_{ref_f} for the follower drive 26.

The main controller 36 is configured for operating the drive arrangement 22. The main controller 36 comprises a memory (not shown) for storing one or more of the above parameter values of the drive arrangement 22 and a processor configured for executing the method for operating the drive arrangement 22 as explained above and in the following.

The master drive 24 and the follower drive 26 are communicatively coupled to each other. For example, the master drive 24 can send the estimated speed nₑₛₜ and/or the master torque reference T_{ref} to the follower drive 26 because of the communicative coupling 28. The follower drive 26 uses the estimated speed nₑₛₜ of the master drive 24 as a follower speed reference n_{ref_f} and additionally may use the master torque reference T_{ref} of the master drive 24 as an estimated follower torque T_{est_f}. The master drive 24 and the follower drive 26 may be communicatively coupled to each other via the communicative coupling 28, which may be a wired or wireless connection. For example, the master drive 24 and the follower drive 26 may be communicatively coupled to each other via a D2D connection representing the communicative coupling 28.

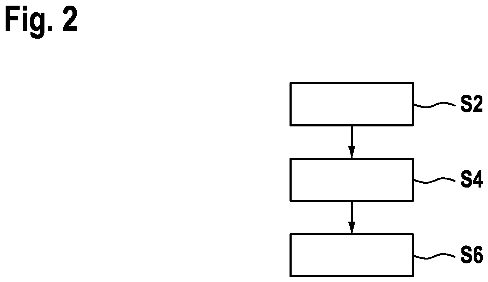

The main controller 36 may be configured for operating the drive arrangement 22 by the method explained with respect to figure 2. For example, a computer program for operating the drive arrangement 22 may be provided. The computer program may be configured such that when the computer program is carried out by the processor of the main controller 36, the processor carries out the method as explained with respect to figure 2. The computer program may be stored on a computer readable medium, which may be the memory of the main controller 36.

Fig. 2 shows a flow diagram of an embodiment of a method for operating the drive arrangement 22. The master drive 24 may be operated in the open-loop mode. The open-loop mode may correspond to any known open-loop mode known in the art of electric motor control. In particular, the master drive 24 may be open-loop controlled depending on the master torque reference T_{ref} of the master drive 24. The master torque reference T_{ref} may be determined by the speed controller 40 of the master drive 24.

In a step S2, the estimated speed nₑₛₜ of the master motor 30 may be determined. The estimated speed nₑₛₜ may be determined by the master motor model 48 of the master drive 24.

In a step S4, the estimated speed nₑₛₜ may be transferred to the follower drive 26. The estimated speed nₑₛₜ may be transferred to the follower drive 26 by the communicative coupling 28.

In a step S6, the follower drive 26 may be operated by using the estimated speed nₑₛₜ of the master drive as the follower speed reference n_{est_f} for the follower drive 26. Operating the follower drive 26 by using the estimated speed nₑₛₜ of the master drive 24 as a follower speed reference n_{est_f} for the follower drive 26 may be referred to as "pseudo-closed-loop" mode. The follower drive 26 may be operated in the pseudo-closed-loop mode by using the estimated speed nₑₛₜ of the master drive 24 as the follower speed reference n_{est_f} for the follower drive 26. In addition, the follower drive 26 may be operated in the pseudo-closed-loop control by using the master torque reference T_{ref} as a follower torque reference T_{ref_f} for the follower drive 26. So, the master drive 24 and the follower drive 26 may be operated in a torque control mode.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: motor arrangement
- 22: drive arrangement
- 24: master drive
- 26: follower drive
- 28: communicative coupling
- 30: master motor
- 32: follower motor
- 34: load
- 36: main controller
- 40: speed controller
- 42: master torque controller
- 44: master modulator
- 46: master power unit
- 48: master motor model
- 52: follower torque controller
- 54: follower modulator
- 56: follower power unit
- 58: follower motor model
- n_{ref}: master speed reference
- *Ψ*_{ref}: master flux reference
- T_{ref}: master torque reference
- U_{ref}: master voltage reference
- iₛ: actual master current
- uₛ: actual master voltage
- *Ψ*ₑₛₜ: estimated master flux
- Tₑₛₜ: estimated master torque
- nₑₛₜ: estimated speed
- n_{ref_f}: follower speed reference
- Ψ_{ref_f}: follower flux reference
- T_{ref_f}: follower torque reference
- U_{ref_f}: follower voltage reference
- i_{s_f}: actual follower current
- u_{s_f}: actual follower voltage
- *Ψ*_{est_f}: estimated follower flux
- T_{est_f}: estimated follower torque

## Claims

1. Method for operating a drive arrangement (22), the drive arrangement (22) comprising a master drive (24) for driving a master motor (30) and at least one follower drive (26) for driving a follower motor (32), wherein the master motor (30) and the follower motor (32) are drivable independent from each other via the master drive (24) and, respectively, the follower drive (26) and wherein the master motor (30) and the follower motor (32) are physically coupled to the same load (34), the method comprising:
determining an estimated speed (nₑₛₜ) of the master motor (30);
transferring the estimated speed (nₑₛₜ) to the follower drive (26);
operating the follower drive (26) by using the estimated speed (nₑₛₜ) of the master drive (24) as a follower speed reference (n_{ref_f}) for the follower drive (26).

2. Method in accordance with claim 1, wherein
the follower drive (26) is operated in a pseudo-closed-loop mode by using the estimated speed (nₑₛₜ) of the master drive (24) as the follower speed reference (n_{ref_f}) for the follower drive (26), and
the master drive (24) is operated in an open-loop mode.

3. Method in accordance with claim 2, wherein
the master drive (24) is open-loop controlled depending on a master torque reference (T_{ref}) of the master drive (24),
the master torque reference (T_{ref}) is transferred to the follower drive (26), and
the follower drive (26) is operated in the pseudo-closed-loop control by using the master torque reference (T_{ref}) as a follower torque reference (T_{ref_f}) for the follower drive (26).

4. Method in accordance with one of the preceding claims, wherein the master torque reference (T_{ref}) is determined by a speed controller (40) of the master drive (24).

5. Method in accordance with claim 4, wherein
the master torque reference (T_{ref}) is determined depending on a master speed reference (n_{ref}) and on the estimated speed (nₑₛₜ).

6. Method in accordance with one of the preceding claims, wherein
the estimated speed (nₑₛₜ) is determined by a master motor model (48) of the master drive (24).

7. Method in accordance with one of the preceding claims, wherein
the estimated speed (nₑₛₜ) is transferred to the follower drive (26) by a D2D communication.

8. Drive arrangement (22), comprising:
a master drive (24) for driving a master motor (30);
at least one follower drive (26) for driving a follower motor (32), wherein the master motor (30) and the follower motor (32) are drivable independent from each other via the master drive (24) and, respectively, the follower drive (26) and wherein the master motor (30) and the follower motor (32) are physically coupled to the same load (34); and
a main controller (36) for operating the drive arrangement (22), wherein the main controller (36) comprises a memory for storing one or more parameter values of the drive arrangement (22) and a processor configured for executing the method in accordance with claims 1 to 7.

9. Drive arrangement (22) according to claim 8, wherein
the master drive (24) comprises a speed controller (40), and
the follower drive (26) is free from any speed controller (40).

10. Drive arrangement (22) according to one of claims 8 or 9, wherein
the master drive (24) and the follower drive (26) are communicatively coupled to each other.

11. Motor arrangement (20), comprising:
a master motor (30) being physically coupled to a load (34);
at least one follower motor (32) being physically coupled to the load (34) and via the load (34) to the master motor (30); and
a drive arrangement (22) in accordance with one of claims 8 to 10.

12. Computer program for operating a drive arrangement (22) in accordance with one of claims 8 to 10, the computer program being configured such that when the computer program is carried out by a processor of a main controller (36), the processor carries out the method in accordance with one of claims 1 to 7.

13. Computer readable medium, on which a computer program in accordance with claim 12 is stored.
